# EUROPÄISCHE PATENTSCHRIFT

(11) **EP 2 331 339 B1**
(45) Veröffentlichungstag und Bekanntmachung des Hinweises auf die Patenterteilung: **31.10.2012**
(21) Anmeldenummer: 09778737.8
(22) Anmeldetag: 25.09.2009
(51) Int. Cl.: B41M 1/30, B41M 3/14, B42D 15/10

(54) **VERFAHREN UND VORRICHTUNG ZUM AUFBRINGEN MINDESTENS EINES BILDES AUF EIN KUNSTSTOFFSUBSTRAT EINES SICHERHEITSDOKUMENTES, SICHERHEITSDOKUMENT MIT EINEM KUNSTSTOFFSUBSTRAT, DAS EIN BILD TRÄGT**
METHOD AND DEVICE FOR APPLYING AT LEAST ONE IMAGE TO A PLASTIC SUBSTRATE OF A SECURITY DOCUMENT, SECURITY DOCUMENT HAVING A PLASTIC SUBSTRATE WHICH BEARS AN IMAGE
PROCÉDÉ ET DISPOSITIF POUR APPLIQUER UNE IMAGE SUR UN SUBSTRAT EN PLASTIQUE D'UN DOCUMENT DE SÉCURITÉ, DOCUMENT DE SÉCURITÉ AVEC UN SUBSTRAT EN PLASTIQUE QUI PORTE UNE IMAGE

(30) Priorität: 26.09.2008 DE 102008049154
(43) Veröffentlichungstag der Anmeldung: 15.06.2011
(73) Patentinhaber: Mühlbauer AG, 93426 Roding (DE)
(72) Erfinder: GRAF, Dominik, 92507 Nabburg (DE); VITZTHUM, Tobias, 93488 Schönthal (DE)
(74) Vertreter: Schmidt, Steffen
(86) Internationale Anmeldenummer: PCT/EP2009/006952
(87) Internationale Veröffentlichungsnummer: WO 2010/034510

(56) Entgegenhaltungen:
- EP-A1- 0 440 814
- WO-A1-00/73088
- GB-A- 2 248 209
- JP-A- 2004 174 958
- JP-A- 2007 334 629

## Beschreibung

### Hintergrund

Hier wird ein Verfahren und eine Vorrichtung zum Aufbringen mindestens eines Bildes auf ein Kunststoffsubstrat eines Sicherheitsdokumentes offenbart. Außerdem wird ein Sicherheitsdokument mit einem Kunststoffsubstrat offenbart, das ein derartiges Bild trägt.

Sicherheitsdokumente, wie beispielsweise Karten, insbesondere Chip-Karten und Smart-Cards von staatlichen Einrichtungen (Pass-, Visabehörden), Banken (Debitkarten, Kreditkarten), Versicherungen (Krankenkassenkarten), oder Kundenkarten, etc. erfordern eine Bedruckung ihrer Oberfläche, um personenspezifische Daten und Erkennungsmerkmale, wie beispielsweise ein Portraitbild der Person, auf dieser Oberfläche anzubringen. Zusätzlich sind üblicher Weise zahlreiche Sicherheitsmerkmale auf derartigen Kartenoberflächen angebracht.

Derartige Karten bestehen meist aus einem Kunststoffmaterial, welches auch mehrschichtig aufgebaut sein kann. Üblicherweise sind die Oberflächen derartiger Kunststoffmaterialien, wie beispielsweise Polycarbonat, derart ausgebildet, dass sie ein direktes Bedrucken mit herkömmlichen Bedruckungseinrichtungen zum Aufbringen von beispielsweise einem Bild oder sonstigen personenspezifischen Daten nicht mit der nötigen dauerhaften Haftung der Druckfarbe auf dem Kartenmaterial zulassen. Vielmehr ist üblicher Weise für derartige Kunststoffkarten das zuvor durchzuführende Auftragen einer Verbindungsschicht, wie zum Beispiel einer Precoating-Schicht (Verbindungsschicht), üblich, um auf diese Weise das Druckbild und somit die Druckfarbe auf der Oberfläche des Kartensubstrates bzw. der Kunststoffkarte dauerhaft haltbar zu machen bzw. anhaften zu lassen.

### Stand der Technik

Bisher werden derartige Precoating-Schichten einheitlich, beispielsweise in rechteckiger oder quadratischer Form ungefähr an derjenigen Stelle der Sicherheitsdokumentkarte aufgetragen, wo später ein Druckbild mit einer Abbildung derjenigen Person, die diese Karte erhalten soll, aufgedruckt werden soll. Derartige Precoating-Schichten weisen eine einheitliche Flächenform mit einfacher geometrischer Gestalt (zum Beispiel rechteckig oder quadratisch) auf, welches wesentlich größer als der Kopf einer Person in einer Portraitaufnahme und gegebenenfalls dessen Hals- und Schulterpartien ist. Der Einfachheit halber wird ein derartiges Passbild, welches nicht nur den Kopf und die Hals- und Schulterpartien umfasst, sondern auch einen Hintergrundanteil enthält, der bei der Bildaufnahme der Person entsteht, vollständig auf die Precoating-Schicht übertragen. Diejenigen Bildanteile bzw. Bildausschnitte, welche den Hintergrund in dem Passfoto darstellen, erfordern dabei unnötige Auftrage- und Druckzeiten für das Aufbringen der Precoating-Schicht und das Bedrucken mit dem Druckbild. Es sind auch andere Bilder oder Motive, als die eines Fotos einer Person, auf der Sicherheitsdokumentkarte denkbar: Zum Beispiel ein Logo oder eine Marke der die Sicherheitsdokumentkarte ausgebenden Institution, das Wappen des jeweiligen Landes, ein Gesundheitszeichen oder ein Baum auf Gesundheitskarten oder Krankenkassenkarten.

Das Dokument EP 0 440 814 A1 beschreibt ein System zum Ausgeben von Identifikationskarten. Daten, wie zum Beispiel, Farbbilder, Name und Geburtsdatum werden erfasst und auf das Substrat der Identifikationskarte gedruckt. Zudem ist ein Prägeschritt vorgesehen, um eine Manipulation der Daten zu verhindern. Auf den Kartenrohlingen sind ferner fluoreszierende Muster oder durchsichtige Barcodes aufgebracht. Die Daten werden dabei nur dann auf die Karte gedruckt, wenn die Karte durch ein Kartenbearbeitungsgerät identifiziert wurde.

In Dokument JP 2007 334629 wird ebenfalls ein System zum Ausgeben von Identifikationskarten beschrieben. Das Dokument JP 2004 174958 beschreibt ein Verfahren zum Vorbereiten von Daten für Passbilder aufweisende Identifikationskarten. Das Dokument GB 2 248 209 A beschreibt ein Sicherheitsdokument mit Passbild und das Dokument WO 00/73088 A1 beschreibt einen Aufzeichnungsträger mit farbigen Bildinformationen.

Aus der DE 10 2006 059 855 A1 und aus der DE 10 2005 or 28 161 A1 ist ein mehrlagig ausgebildeter tragbarer Datenträger mit einer Kernschicht und einer Bildempfangsschicht bekannt. Auf die Bildempfangsschicht ist durch Transferthermographie eine graphische Information aufgebracht. Die Bildempfangsschicht ist transparent und ein transparenter Schichtenverbund aus einer Trägerschicht und einer Akzeptorschicht. Die Trägerschicht besteht im wesentlichen aus einem amorphen Polyester, insbesondere PETG. Die Akzeptorschicht besteht im wesentlichen aus einem Gemisch von PETG mit wenigstens 10 Gew.-% eines Polymers aus der Gruppe der Styrolpolymere. Dabei ist der Schichtenverbund eine einzelne, durch Coextrusion hergestellte Folie. Das in der Akzeptorschicht enthaltene Styrolpolymer ist ein Polymer aus der Gruppe der Styrol-Copolymere, insbesondere Acrylnitrit-Styrol-Acrylesther. Die Trägerschicht ist aus Polycarbonat.

Aus der WO/2000/073088 A1 ist ein Aufzeichnungsträger mit farbigen Bildinformationen bekannt, bei dem die farbigen Bildinformationen in einem Thermoverfahren (Thermosublimation oder Thermotransfer) auf eine zur Haftvermittlung behandelte Oberfläche einer Schicht aus Polycarbonat aufgebracht sind. Auf die Oberfläche ist ein haftvermittelnder, lösungsmittelhaltiger Siebdrucklack aufgetragen. Wenigstens die farbigen Bildinformationen sind mit einer Schutzschicht aus einer Folie oder einem lösungsmittelhaltigen Siebdrucklack abgedeckt sind. Unterhalb oder oberhalb der farbigen Bildinformationen ist ein Schwarzweißanteil der farbigen Bildinformationen angeordnet, der unter vollständigem Erhalt der farbigen Bildinformationen mit Hilfe eines Laserstrahlschreibers eingebracht ist.

### Probleme des Standes der Technik

Sofern ein derartiges Verfahren zum Aufbringen eines Bildes auf ein Kunststoffsubstrat in eine Vorrichtung zum Personalisieren von einer großen Anzahl von Sicherheitsdokumenten integriert ist, werden für den eigentlichen Druckvorgang Thermodruckvorrichtungen verwendet, die zum Auftragen der zusätzlichen Hintergrundanteile für die Precoating-Schicht und das Bedrucken der zusätzlichen Hintergrundanteile einen erhöhten Zeitbedarf und Bedarf an Precoatingmaterial erfordern. Dies reduziert den Durchsatz der gesamten Personalisierungsvorrichtung.

Zudem weisen derartige zusätzliche Hintergrundflächenanteile nachteilig oft eine unschöne Oberfläche auf, insbesondere wenn die Precoating-Schicht in bestimmten Bereichen, gegebenenfalls in dem gesamten Bereich des Hintergrundbildanteiles, nicht durch das personenspezifische Passfoto bedruckt ist.

Weiterhin benötigen derartige Flächen, die mit Hintergrundflächenanteilen bedruckt sind, Platz auf der Sicherheitsdokumentkarte. Dies führt dazu, dass dieser Platz nicht für andere aufzutragende Daten, wie beispielsweise weitere Sicherheitsmerkmale in Form von Hologrammen oder Schriftzügen, zur Verfügung steht. Da die Oberfläche einer herkömmlichen Sicherheitsdokumentkarte in den üblichen Kartenformaten ohnehin nicht sehr groß ist, steht der bedruckbare Oberflächenanteil der Karte nur in begrenztem Maß zur Verfügung.

Hinzu kommt, dass derartige größere Flächen bei einem anzuwendenden Thermodruckverfahren, beispielsweise mittels einer Thermode, lange Aufheizzeiten erfordern, woraus sich wiederum ein geringer Durchsatz der gesamten Vorrichtung ergibt.

### Zugrundeliegende Aufgabe

Hieraus ergibt sich die Aufgabe, ein Verfahren und eine Vorrichtung zum Aufbringen mindestens eines Bildes auf ein Kunststoffsubstrat eines Sicherheitsdokumentes zur Verfügung zu stellen, mit dem/der ein schnelles Aufbringen von für das Sicherheitsdokument relevanten Bildausschnitten möglich ist.

### Lösung

Bei einem Verfahren zum Aufbringen von mindestens einem Bild auf ein Kunststoffsubstrat eines Sicherheitsdokumentes können folgende Schritte durchgeführt werden:
- Auswählen eines Bildausschnittes aus elektronisch gespeicherten Bilddaten eines Bildes;
- Auftragen einer Verbindungsschicht auf das Kunststoffsubstrat, deren Flächengröße und Flächenform der Flächengröße und Flächenform des ausgewählten Bildausschnittes entspricht oder nahezu entspricht; und
- Bedrucken der aufgetragenen Verbindungsschicht mit einem den Bildausschnitt wiedergebenden Druckbild derart, dass die Verbindungsschicht und das Druckbild deckungsgleich oder zumindest nahezu deckungsgleich sind.

Dabei kann das Auswählen des für das Sicherheitsdokument relevanten Bildausschnittes aus elektronisch gespeicherten Bilddaten eines Bildes mit Hilfe einer Auswahleinrichtung erfolgen. Diese Auswahleinrichtung kann zum Beispiel anhand vorgegebener Konturen den Kopf, den Hals und die Schulterpartie einer auf einem Passfoto abgebildeten Person erkennen und vom Hintergrund freistellen. Das Auftragen der Verbindungsschicht (Precoatingschicht) auf das Kunststoffsubstrat kann mittels einer Auftrageeinrichtung geschehen, die die Verbindungsschicht auf das Kunststoffsubstrat als Folie aufträgt, oder dergl. Vorzugsweise ist es ein festes Material, vorzugsweise ein Thermotransferband, das zum Beispiel die Imperial Chemical Industries Limited unter der Bezeichnung Unichroma in den Handel bringt. Das Bedrucken der aufgetragenen Verbindungsschicht mit dem Bildausschnitt kann mittels einer Bedruckungseinrichtung geschehen. Die Bedruckungseinrichtung bringt das Bild als Thermodruck, als Transferdruck, als Tintenstrahldruck, Laserdruck, Thermosublimationsdruck, oder dergl. auf. Bei einem Thermosublimationsdruck wird eine mit Farbwachs beschichtete Trägerfolie über eine Leiste mit Heizelementen (Thermoden) geführt, die das Farbwachs verzögerungsfrei auf ca. 300 - 400 °C erhitzen, so dass sich das Wachs von der Folie löst und vom festen in den gasförmigen Zustand übergeht. Beim Verdampfen verbindet sich die Farbe vollständig mit der Verbindungsschicht, so dass kein fühlbarer Farbauftrag wie beispielsweise bei Tintenstrahl- oder auch Laserdruckern vorhanden ist. Dabei kann ein fotorealistisches Bild in vier Durchgängen aufgedruckt (Cyan, Magenta, Yellow), wobei beim vierten Durchlauf eine farblose Fixierschicht auf das fertige Bild aufgetragen wird. Dadurch wird das Bild äußerst widerstandsfähig gegen Umwelteinflüsse wie beispielsweise Kratzer oder auch Feuchtigkeit.

Die farblose Fixierschicht dient als die Schutzschicht / Overlay. Eine derartige Schutzschicht kann entweder vollflächig auf das Kunststoffsubstrat oder ebenso in der Form der Abbildung des Kopfes sowie gegebenenfalls Hals- und Schulterpartie einer auf einem Passfoto abgebildeten Person aufgetragen werden.

So kann beispielsweise der Kopf sowie gegebenenfalls Hals- und Schulterpartie einer auf einem Passfoto abgebildeten Person, oder andere für das Sicherheitsdokument relevante Bildausschnitte, die zuvor mittels einer Bilddatenverarbeitung elektronisch ausgeschnitten werden und lediglich der sich hieraus ergebende Bildausschnitt mit einer begrenzten Fläche aufgetragen werden. Durch diese Maßnahme kann die Druckzeit und die Aufheizzeit bei der Anwendung eines Thermodruckverfahrens verringert werden. Auch bei anderen Druckverfahren ergeben sich entsprechende Vorteile. Ebenso wird die Verbindungsschicht (Precoating-Schicht) zuvor mit einem Flächenausmaß aufgetragen, welches vorzugsweise genau oder zumindest nahezu genau dem Flächenausmaß bzw. der Flächengröße und der Flächenform des zuvor ausgeschnittenen Bildausschnittes entspricht. So werden keine weiteren Flächenanteile des Kunststoffsubstrates außerhalb des Bildanteils, der den Kopf und gegebenenfalls Hals- und Schulterpartie enthält, auf dem Kunststoffsubstrat mit einer Precoating-Schicht versehen. Dies führt dazu, dass diese Anteile der Verbindungsschicht auf der Oberfläche des Kunststoffsubstrates nicht mehr optisch nachteilig erscheinen können und zugleich die Fläche für andere Sicherheitsmerkmale oder dergleichen zur Verfügung steht, da diese Anteile der Verbindungsschicht - im Gegensatz zum Stand der Technik - hier nicht mehr vorhanden sind.

Somit reduziert sich der Bildausschnitt, wenn es um ein Passfoto bzw. Portraitfoto geht, auf die minimal erforderlichen Anteile des Fotos, nämlich den Kopf und gegebenenfalls die Hals- und Schulterpartie. Ein derartiger minimierter Flächenanteil der Precoating-Schicht als auch der Druckfläche des Druckbildes auf dem Sicherheitsdokument erfordert nur noch geringere Aufheizzeiten während zum Beispiel eines Thermodruckverfahrens. So ist ein höherer Durchsatz in einer Personalisierungsvorrichtung möglich, die zum Beispiel ein derartiges Thermodruckverfahren zusammen mit der Auftragung der Verbindungsschicht auf der Oberfläche des Sicherheitsdokumentes durchführt. Insgesamt führt dies zu einer schneller arbeitenden Vorrichtung und somit zu einer höheren Zahl an hergestellten Sicherheitsdokumentkarten mit aufgedrucktem Personenbild pro Zeiteinheit.

Der Schritt des Auswählens eines Bildausschnittes aus elektronisch gespeicherten Bilddaten weist gemäß einer bevorzugten Ausführungsform den Schritt/die Schritte der Bestimmung von Farbunterschieden einzelner Bildbereiche und/oder Helligkeitsunterschieden einzelner Bildbereiche und/oder Linienverläufen zwischen den einzelnen Bildbereichen im elektronisch gespeicherten Bild mit Hilfe einer Bestimmungseinrichtung auf. So kann beispielsweise der Unterschied zwischen dem eigentlichen Personenkopf und dem hell gehaltenen Hintergrund festgestellt werden, um anschließend den Personenkopf elektronisch vom Hintergrund zu trennen bzw. den Personenkopf auszuschneiden. So lässt sich eine Kontur des Personenkopfes und gegebenenfalls der Hals- und Schulterpartien ermitteln und anhand dieser Kontur bzw. Flächenform der die Person darstellende Bildausschnitt von dem Hintergrundanteil trennen.

Anhand der so bestimmten Farbunterschiede und/oder Helligkeitsunterschiede und/oder Linienverläufe kann eine Vielzahl an Flächenpositionsdaten eines ausgewählten Bildausschnittes innerhalb des elektronisch gespeicherten Bildes ermittelt werden. Dies geschieht mit einer Ermittlungseinrichtung. Derartige Flächenpositionsdaten geben die Flächenform und die Flächengröße des Bildausschnittes innerhalb des Gesamtbildes wieder und ermöglichen ein für die Steuerung oder Regelung geeignetes datenmäßiges Festlegen des gewünschten bzw. ausgewählten Bildausschnittes.

Diese Flächenpositionsdaten werden an eine erste Steuerungs- oder Regelungseinrichtung der Auftrageeinrichtung sowie an eine zweite Steuerungs- oder Regelungseinrichtung der Bedruckungseinrichtung übermittelt.

Die erste Steuerungs- oder Regelungseinrichtung empfängt die Flächenpositionsdaten und steuert oder regelt in dem Schritt des Auftragens der Verbindungsschicht die Auftrageeinrichtung derart, dass die Verbindungsschicht mit den übertragenen Flächenpositions- und Flächenausdehnungsdaten auf eine Oberfläche des Kunststoffsubstrates aufgetragen wird. Damit wird nicht zu viel, aber auch nicht zu wenig Material für die Verbindungsschicht aufgetragen, da die Verbindungsschicht hierdurch exakt oder zumindest nahezu exakt die Flächengröße und Flächenform des später darauf aufzudruckenden Personenkopfes gegebenenfalls mit Hals- und Schulterpartie aufweist. Unter "exakt oder zumindest nahezu exakt die Flächengröße und Flächenform des später darauf aufzudruckenden Personenkopfes aufweisen" sei verstanden, dass die Verbindungsschicht einen Flächeninhalt hat, der maximal etwa 3% bis etwa 10% größer ist als der Flächeninhalt des Druckbildes. Außerdem kann die Verbindungsschicht eine Gestalt und Abmessungen haben, die mit denen später darauf aufzudruckenden Personenkopfes praktisch übereinstimmen, aber in alle Richtungen das Bild des aufzudruckenden Personenkopfes geringfügig (etwa 1% bis etwa 10%) überragen.

Die Verbindungsschicht oder Precoating-Schicht kann als Material Verbindungen auf Polyester-Basis aufweisen, die es ermöglichen, eine dauerhafte Haltbarkeit der Druckfarbe auf dem Kartensubstratmaterial sicherzustellen, welches zum Beispiel aus Polycarbonat bestehen kann.

Die Flächenpositionsdaten werden ebenso an die zweite Steuerungs- oder Regelungseinrichtung der Bedruckungseinrichtung übertragen. Die zweite Regelungseinrichtung steuert oder regelt die Bedruckungseinrichtung derart, dass das Druckbild mit den darauf angewendeten Flächenpositionsdaten auf eine Oberfläche der Verbindungsschicht flächendeckend aufgetragen wird. So werden zum einen keine Anteile des Kunststoffsubstrates bedruckt, die nicht zuvor mit einer Verbindungsschicht versehen worden sind. Zum anderen verbleiben keine Anteile der Verbindungsschicht ohne Druckfarbe, da sowohl die erste als auch die zweite Steuerungs- oder Regelungseinrichtung die gleichen Flächenpositionsdaten erhalten haben.

Eine Vorrichtung zur Durchführung eines derartigen Verfahrens die Auswahleinrichtung zum Auswählen des Bildausschnittes aus den elektronisch gespeicherten Bilddaten des Bildes, die Auftrageeinrichtung zum Auftragen der Verbindungsschicht auf das Kunststoffsubstrat, deren Flächengröße und Flächenform der Flächengröße und Flächenform des ausgewählten Bildausschnittes entspricht und die Bedruckungseinrichtung zum Bedrucken der aufgetragenen Verbindungsschicht mit dem den Bildausschnitt wiedergebenden Druckbild derart, dass die Verbindungsschicht und das Druckbild deckungsgleich oder nahezu deckungsgleich bzw. flächendeckend oder nahezu flächendeckend sind, aufweisen.

Zudem weist eine derartige Vorrichtung die erste und zweite Steuerungs- oder Regelungseinrichtung, die Bestimmungseinrichtung und die Ermittlungseinrichtung auf, deren Funktionsweisen bereits beschrieben worden sind.

Die erste und die zweite Steuerungs- oder Regelungseinrichtung oder Teile hiervon können in einer gemeinsamen Steuereinrichtung, zum Beispiel einer elektronischen Datenverarbeitungsanlage zusammengefasst sein, deren Funktion durch eine Computerprogrammsoftware gesteuert sein kann.

Mehrere Bedruckungseinrichtungen (für Farbbilder: gelb, magenta, cyan, schwarz) für die Verbindungs-/ und/oder Overlayschichten werden durch eine oder mehrere Steuerungs- oder Regelungseinrichtung gesteuert oder geregelt. Mit anderen Worten wird mindestens eine Bedruckungseinrichtung durch mindestens eine Steuerungs- oder Regelungseinrichtung gesteuert oder geregelt.

Mehrere Steuer - und/oder Regelungseinrichtungen sind zur Ausführung der jeweiligen Funktionen möglich. Die eine oder mehrere Steuer - und/oder Regelungseinrichtungen können gemeinsam oder getrennt ausgebildet, realisiert und implementiert sein.

Weitere vorteilhafte Ausführungsformen ergeben sich aus den Unteransprüchen.

### Kurzbeschreibung der Zeichnungen

Weitere Ziele, Merkmale, Vorteile und Anwendungsmöglichkeiten ergeben sich aus der nachfolgenden Beschreibung von nicht einschränkend zu verstehenden Ausführungsbeispielen und den zugehörigen Zeichnungen. Dabei bilden alle beschriebenen und/oder bildlich dargestellten Merkmale für sich oder in beliebiger Kombination den hier offenbarten Gegenstand, auch unabhängig von ihrer Gruppierung in den Ansprüchen oder deren Rückbeziehungen.
Fig. 1 zeigt in einer schematischen Darstellung fünf Ablaufschritte anhand der Darstellung eines Personenbildes für die Durchführung des Verfahrens.
Fig.2 zeigt in einem Flussdiagramm einen möglichen Ablauf des Verfahrens.

### Detaillierte Beschreibung der Zeichnungen

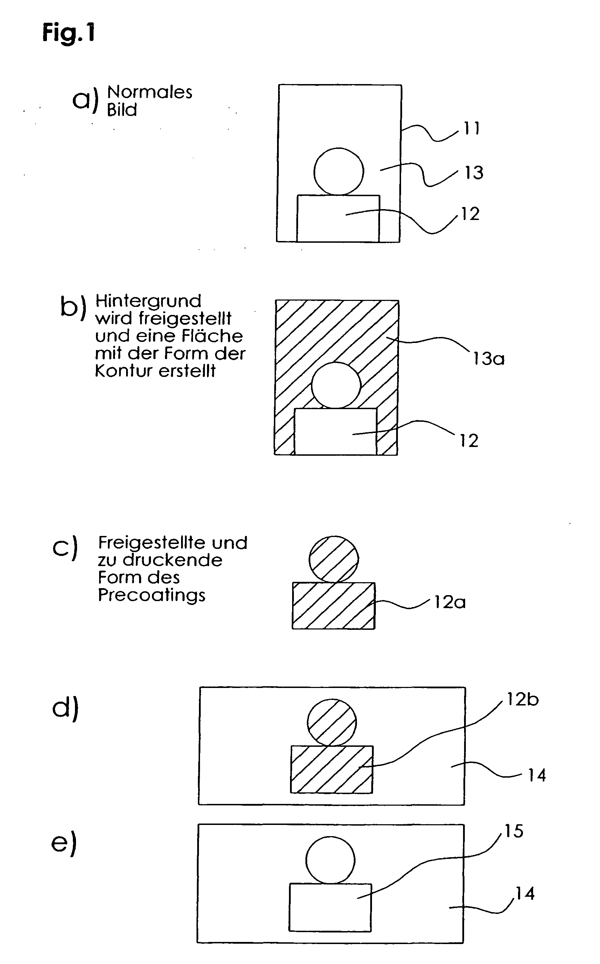

In Fig. 1 wird in einer schematischen Darstellung ein Bildverarbeitungsprozess dargestellt, um das Verfahren durchzuführen.

In einem ersten Schritt **a** wird ein normales Bild 11, wie beispielsweise ein Passfoto, mit einer Person 12 und einem Hintergrundanteil 13 in einer elektronischen Datenverarbeitungsanlage erfasst und digitalisiert.

In einem Schritt **b** wird mit einer Bilddatenverarbeitungssoftware in der elektronischen Datenverarbeitungsanlage in dem digitalisierten Bild 11 anhand von Farbunterschieden und/oder Helligkeitsunterschieden und/oder Linien bzw. Konturen der Hintergrundanteil 13 des Bildes erkannt und als solcher gekennzeichnet, wie es auch mit dem Bezugszeichen 13a wiedergegeben wird. Hierdurch sind die Konturen bzw. die Flächenform der eigentlichen Personendarstellung, nämlich des Kopfes sowie des Hals- und Schulteranteiles der Person 12 herausgearbeitet und können in dem digitalisierten Bild freigestellt werden.

In dem Schritt c wird dann mit der Bilddatenverarbeitungssoftware in der elektronischen Datenverarbeitungsanlage in dem digitalisierten Bild 11 der Hintergrund 13a gelöscht oder "elektronisch weggeschnitten", um eine überbleibende Bildausschnittsvorlage 12a, die nur die Person wiedergibt, zu erhalten. Diese Bildausschnittsvorlage 12a ist beispielsweise mit der Bilddatenverarbeitungssoftware in der elektronischen Datenverarbeitungsanlage als Flächenpositionsdaten elektronisch erzeugt und abgelegt. So kann diese Bildausschnittsvorlage 12a sowohl an eine Auftrageeinrichtung zum Auftragen der Verbindungsschicht als auch an eine Bedruckungseinrichtung zum Bedrucken der Verbindungsschicht mit dem den Bildausschnitt wiedergebenden Druckbild weitergeleitet werden. Vorteilhaft können sowohl die Auftrageeinrichtung als auch die Bedruckungseinrichtung in einer gemeinsamen Thermodendruckeinrichtung integriert sein.

In dem Schritt **d** wird dann anhand der übermittelten Flächenpositions- und / oder Flächenabmessungsdaten der Bildausschnitt 12a durch die Auftrageeinrichtung auf ein Kunststoffsubstrat 14 einer Sicherheitsdokumentkarte übertragen. So wird die Verbindungsschicht 12b mit dieser Flächengröße und der Flächenform des Bildausschnittes 12a dauerhaft auf der Oberfläche des Kunststoffsubstrates angeordnet. Das Kunststoffsubstrat 14 kann ein Material oder mehrere Materialien der Gruppe Polyethylen (PE), Polyvinylchlorid (PVC), Polyethylenterephthalat (PET) oder Glykol-modifiziertes Polyethylenterephthalat (PETG), Polyethylennaphthalat (PEN), AcrylnitrilButadien-Styrol-Copolymerisat (ABS), Polyvinylbutyral (PVB), Polymethylmethacrylat (PMMA), Polyimid (PI), Polyvinylalkohol (PVA), Polystyrol (PS), Polyvinylphenol (PVP), Polyethylen (PE), Polypropylen (PP), oder Polycarbonat (PC) enthalten.

Anschließend findet in einem Schritt **e** der eigentliche Bildbedruckungsvorgang auf dem Kunststoffsubstrat 14 statt. Dabei wird die Verbindungsschicht 12b in ihrer gesamten Größe und Erstreckung mit dem die Person wiedergebenden Druckbild 15 bedruckt. Anschließend ist die Verbindungsschicht 12b durch das Druckbild 15 abgedeckt. Dies geschieht in der Form, dass die Verbindungsschicht 12b genau flächendeckend mit dem Druckbild 15 ist und hierdurch weder seitlich vorstehende Verbindungsschichtanteile noch seitlich vorstehende Druckbildanteile existieren.

Als letzter Schritt kann auf den das Druckbild 15 wiedergebenden Bildausschnitt eine Schutzschicht aufgetragen werden, die entweder vollflächig auf das Kunststoffsubstrat mit dem Druckbild 15 oder nur in der Form des Druckbildes 15 auf dieses aufgetragen wird.

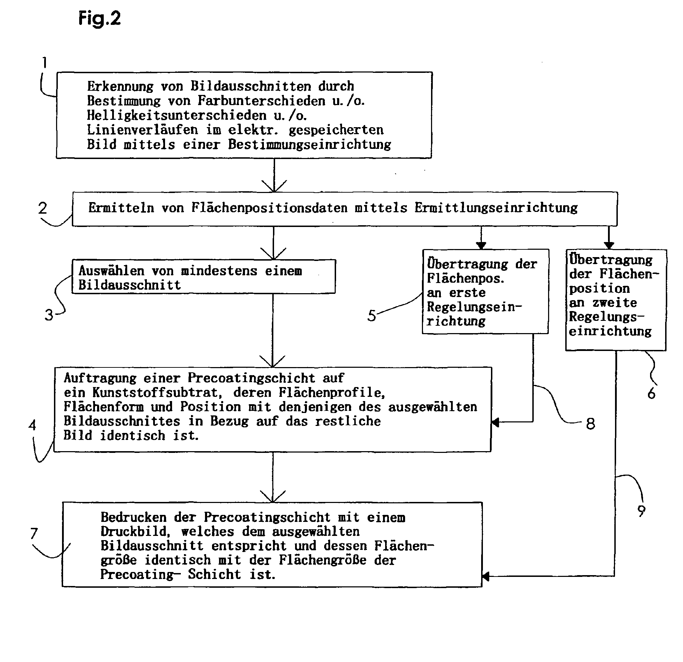

In Fig. 2 wird der Ablauf des Verfahrens dargestellt. In einem ersten Schritt 1 findet die Erkennung von Bildausschnitten durch die Bestimmung von Farbunterschieden und/oder Helligkeitsunterschieden und/oder Linienverläufen im elektronisch gespeicherten Bild mittels einer Bestimmungseinrichtung und einer Bilddatenverarbeitung statt. Dieses Erkennen von Bildausschnitten hat - ähnlich wie in Fig. 1 bereits dargestellt - vorrangig das Ziel, eine Person von den Hintergrundflächenanteilen in ihren Konturen zu trennen.

In einem Schritt 2 werden Flächenpositionsdaten mittels einer Ermittlungseinrichtung ermittelt, wobei die Flächenpositionsdaten vorzugsweise die Positionsdaten des ausgewählten Bildausschnittes wiedergeben.

In einem Schritt 3 findet dann das Auswählen des eigentlichen Bildausschnittes statt, also in diesem Fall das Auswählen derjenigen Flächenanteile in dem Bild, welche die eigentliche Person und die Kontur wiedergeben. Zugleich werden die Flächenpositionsdaten an eine mit einer Auftrageeinrichtung in Verbindung stehenden ersten Steuerungs- oder Regelungseinrichtung und an einer mit einer Bedruckungseinrichtung in Verbindung stehenden zweiten Steuerungs- oder Regelungseinrichtung gemäß den Schritten 5, 6 übertragen.

In einem vierten Schritt wird anhand der ermittelten Positionsdaten eine Auftragung der Precoating-Schicht auf das Kunststoffsubstrat durchgeführt, wobei die Flächengröße, die Flächenform und die Positionierung der Precoating-Schicht auf der Sicherheitsdokumentkarte mit denjenigen des ausgewählten Bildausschnittes in Bezug auf das restliche Bild vorzugsweise identisch ist.

Eine derartige flächenexakte Auftragung der Precoating-Schicht findet mit Hilfe der ersten Steuerungs- oder Regelungseinrichtung 8 derart statt, dass die erste Steuerungs- oder Regelungseinrichtung die Positionierung und den Ablauf des Auftragevorganges der Verbindungsschicht in Bezug auf die Auftragungseinrichtung steuert oder regelt.

Ebenso regelt die zweite Steuerungs- oder Regelungseinrichtung gemäß dem Schritt 9 die Bedruckungseinrichtung derart, dass in einem Schritt 7 das Bedrucken der Precoating-Schicht mit einem Druckbild stattfindet, welches dem ausgewählten Bildausschnitt entspricht und dessen Flächengröße identisch mit der Flächengröße der Precoating-Schicht ist.

Ein derartiger Bedruckungsvorgang sollte also derart stattfinden, dass genau die Verbindungsschicht, welche zuvor aufgetragen worden ist, durch das Druckbild abgedeckt wird, wobei weder Verbindungsschichtanteile noch Schichtanteile des Druckbildes seitlich jeweils gegenüber der anderen Schicht überstehen sollten. Sowohl die Aufheizzeiten in einem Thermo(transfer-)druckverfahren als auch die Bearbeitungszeiten der gesamten Vorrichtung können so erheblich reduziert werden. Außerdem stehen weitere Oberflächenanteile des Kartensubstrates für das Aufbringen weiterer Merkmale, zum Beispiel Sicherheitsmerkmale, zur Verfügung, wenn die Hintergrundanteile des Passbildes nicht auf das Kartensubstrat bzw. Kunststoffsubstrat mit übertragen wurden.

So entsteht ein Sicherheitsdokument mit einem Kunststoffsubstrat 14, das ein Bild trägt, wobei ein Bildausschnitt 12, 12a eines Bildes 11,12,13 auf das Sicherheitsdokument aufgebracht ist. Zwischen den Bildausschnitt 12, 12a des Bildes 11, 12, 13 und das Kunststoffsubstrat 14 ist eine Verbindungsschicht 12b auf das Kunststoffsubstrat 14 aufgebracht, deren Flächengröße und Flächenform der Flächengröße und Flächenform des ausgewählten Bildausschnittes 12, 12a entspricht oder nahezu entspricht, so dass die Verbindungsschicht 12b und das Druckbild 15 deckungsgleich oder nahezu deckungsgleich sind.

Die Verbindungsschicht 12b hat einen Flächeninhalt, der maximal etwa 1% bis etwa 10%, zum Beispiel etwa 5% größer ist als der Flächeninhalt des Druckbildes 15. Die Verbindungsschicht 12b überragt in diesem Fall das Druckbild entlang seines Randes etwa gleichmäßig.

Die vorstehend erläuterten Erzeugnis- Vorrichtungs- und Verfahrensdetails sind zwar im Zusammenhang dargestellt; es sei jedoch darauf hingewiesen, dass sie auch unabhängig von einander sind und auch frei miteinander kombinierbar sind. Die in den Fig. gezeigten Verhältnisse der einzelnen Teile und Abschnitte hiervon zueinander und deren Abmessungen und Proportionen sind nicht einschränkend zu verstehen. Vielmehr können einzelne Abmessungen und Proportionen auch von den gezeigten abweichen.

## Patentansprüche

1. Verfahren zum Aufbringen mindestens eines Bildes auf ein Kunststoffsubstrat (14) eines Sicherheitsdokumentes mit folgenden Schritten:
- Auswählen (3) eines Bildausschnittes (12, 12a) aus elektronisch gespeicherten Bilddaten eines Bildes (11,12,13);
- Auftragen (4) einer Verbindungsschicht (12b) auf das Kunststoffsubstrat (14), deren Flächengröße und Flächenform der Flächengröße und Flächenform des ausgewählten Bildausschnittes (12, 12a) entspricht oder nahezu entspricht;
- Bedrucken (7) der aufgetragenen Verbindungsschicht (12b) mit einem den Bildausschnitt wiedergebenden Druckbild (15) derart, dass die Verbindungsschicht (12b) und das Druckbild (15) deckungsgleich oder nahezu deckungsgleich sind.

2. Verfahren nach Anspruch 1,
wobei der Schritt des Auswählens (3) eines Bildausschnittes (12, 12a) aus elektronisch gespeicherten Bilddaten den Schritt/die Schritte der Bestimmung (1) von Farbunterschieden einzelner Bildbereiche und/oder von Heiligkeitsunterschieden einzelner Bildbereiche und/oder von Linienverläufen zwischen einzelnen Bildbereichen im elektronisch gespeicherten Bild mittels einer Bestimmungseinrichtung umfasst.

3. Verfahren nach Anspruch 1 oder 2,
wobei anhand der bestimmten Farbunterschiede und/oder Helligkeitsunterschiede und/oder Linienverläufe Flächenpositionsdaten eines auszuwählenden Bildausschnittes (12) des elektronisch gespeicherten Bildes (13a, 11, 12, 13) mittels einer Ermittlungseinrichtung ermittelt werden (2).

4. Verfahren nach Anspruch 3,
wobei die Flächenpositionsdaten an eine erste Regelungseinrichtung der Auftrageeinrichtung gesendet werden (5).

5. Verfahren nach Anspruch 4,
wobei in dem Schritt des Auftragens (4) einer Verbindungsschicht (12b) die erste Regelungseinrichtung die Auftrageeinrichtung derart steuert oder regelt (8), dass die Verbindungsschicht (12b) mit den übertragenen Flächenpositionsdaten auf eine Oberfläche des Kunststoffsubstrates (14) aufgetragen wird.

6. Verfahren nach einem der Ansprüche 3 - 5,
wobei die Flächenpositionsdaten an eine zweite Regelungseinrichtung der Bedruckungseinrichtung übertragen werden (6).

7. Verfahren nach Anspruch 6,
wobei die zweite Regelungseinrichtung die Bedruckungseinrichtung derart steuert oder regelt (9), dass das Druckbild (15) mit den darauf angewendeten Flächenpositionsdaten auf eine Oberfläche der Verbindungsschicht (12b) flächendeckend oder nahezu flächendeckend aufgetragen wird.

8. Verfahren nach einem der vorangegangenen Ansprüche,
wobei der Bildausschnitt (12, 12a) einen Kopf und ggf. einen Hals- und Schulterbereich einer Person innerhalb einer Portraitaufnahme darstellt.

9. Verfahren nach einem der vorangegangenen Ansprüche,
wobei die Verbindungsschicht (12b) eine Precoating-Schicht, vorzugsweise aus Polyester enthaltendem Material ist.

10. Verfahren nach einem der vorangegangenen Ansprüche,
wobei auf den das Druckbild (15) wiedergebenden Bildausschnitt eine Schutzschicht aufgetragen wird, die entweder vollflächig auf das Kunststoffsubstrat mit dem Druckbild (15) oder nur in der Form des Druckbildes (15) auf dieses aufgetragen wird.

11. Vorrichtung zur Durchführung eines Verfahrens nach einem der vorangegangenen Ansprüche,
wobei die Vorrichtung
- eine Auswahleinrichtung zum Auswählen (3) eines Bildausschnittes (12, 12a) aus elektronisch gespeicherten Bilddaten eines Bildes (11,12,13),
- eine Auftrageeinrichtung zum Auftragen (4) einer Verbindungsschicht (12) auf das Kunststoffsubstrat (14), deren Flächengröße und Flächenform der Flächengröße und Flächenform des ausgewählten Bildausschnittes (12, 12a) entspricht oder nahezu entspricht, und
- eine Bedruckungseinrichtung zum Bedrucken (7) der aufgetragenen Verbindungsschicht (12b) mit einem dem Bildausschnitt wiedergebenden Druckbild (15) derart, dass die Verbindungsschicht (12b) und das Druckbild (15) deckungsgleich oder nahezu deckungsgleich sind,
aufweist.

12. Vorrichtung nach Anspruch 11,
wobei eine Bestimmungseinrichtung zum Bestimmen von Farbunterschieden einzelner Bildbereiche und/oder Helligkeitsunterschieden einzelner Bildbereiche und/oder Linienverläufen einzelner Bildbereiche im elektronisch gespeicherten Bild; eine erste Regelungseinrichtung zum Regeln (8) der Auftrageeinrichtung derart, dass die Verbindungsschicht (12b) mit empfangenen Flächenpositionsdaten auf eine Oberfläche des Kunststoffsubstrates (14) aufgetragen wird, und eine zweite Regelungseinrichtung zum Regeln (9) der Bedruckungseinrichtung derart angeordnet sind, dass das Druckbild (15) mit den darauf angewendeten Flächenpositionsdaten auf eine Oberfläche der Verbindungsschicht (12b) flächendeckend oder nahezu flächendeckend aufgetragen wird.

13. Vorrichtung nach Anspruch 11 oder 12,
wobei die erste und die zweite Regelungseinrichtung zu einer einzigen Steuer- oder Regelungseinrichtung zusammengefasst sind.

14. Sicherheitsdokument mit einem Kunststoffsubstrat (14), das ein Bild trägt, wobei ein Bildausschnitt (12, 12a) eines Bildes (11,12,13) auf das Sicherheitsdokument aufgebracht ist und zwischen den Bildausschnitt (12, 12a) des Bildes (11,12,13) und das Kunststoffsubstrat (14) eine Verbindungsschicht (12b) auf das Kunststoffsubstrat (14) aufgebracht ist, deren Flächengröße und Flächenform der Flächengröße und Flächenform des ausgewählten Bildausschnittes (12, 12a) entspricht oder nahezu entspricht, so dass die Verbindungsschicht (12b) und das Druckbild (15) deckungsgleich oder nahezu deckungsgleich sind.

15. Sicherheitsdokument mit einem Kunststoffsubstrat (14) nach Anspruch 14, wobei die Verbindungsschicht (12b) einen Flächeninhalt hat, der maximal etwa 1% bis etwa 10% größer ist als der Flächeninhalt des Druckbildes (15), und/oder wobei auf den das Druckbild (15) wiedergebenden Bildausschnitt eine Schutzschicht aufgetragen ist, die entweder vollflächig auf das Kunststoffsubstrat mit dem Druckbild (15) oder nur in der Form des Druckbildes (15) auf dieses aufgetragen ist.

## Claims

1. Method for applying at least one image to a plastics substrate (14) of a security document, comprising the following steps:
- selection (3) of an image section (12, 12a) from electronically stored image data of an image (11, 12, 13);
- application (4) of a connecting layer (12b) to the plastics substrate (14), the surface area and surface shape of the connecting layer (12b) corresponding or almost corresponding to the surface area and surface shape of the selected image section (12, 12a);
- printing (7) of the applied connecting layer (12b) with a printed image (15) that reproduces the image section, in such a manner that the connecting layer (12b) and the printed image (15) are congruent or almost congruent.

2. Method according to claim 1,
wherein the step of selecting (3) an image section (12, 12a) from electronically stored image data comprises the step/steps of determining (1) differences in colour between individual image areas and/or differences in brightness between individual image areas and/or lines between individual image areas in the electronically stored image by means of a determination device.

3. Method according to claim 1 or 2,
wherein, on the basis of the determined differences in colour and/or differences in brightness and/or lines, surface position data of an image section (12) of the electronically stored image (13a, 11, 12, 13) that is to be selected are calculated by means of a calculation device (2).

4. Method according to claim 3,
wherein the surface position data are sent to a first regulating device of the application device (5).

5. Method according to claim 4,
wherein in the step of applying (4) a connecting layer (12b), the first regulating device controls or regulates (8) the application device in such a manner that the connecting layer (12b) is applied, with the transmitted surface position data, to a surface of the plastics substrate (14).

6. Method according to any one of claims 3 to 5,
wherein the surface position data are transmitted to a second regulating device of the printing device (6).

7. Method according to claim 6,
wherein the second regulating device controls or regulates (9) the printing device in such a manner that the printed image (15) is applied, with the surface position data applied thereto, to the entire area or almost the entire area of a surface of the connecting layer (12b).

8. Method according to any one of the preceding claims,
wherein the image section (12, 12a) represents a head and, optionally, a neck and shoulder region of a person within a portrait photograph.

9. Method according to any one of the preceding claims,
wherein the connecting layer (12b) is a precoating layer, preferably of polyester-containing material.

10. Method according to any one of the preceding claims,
wherein a protective layer is applied to the image section that reproduces the printed image (15), the protective layer being applied either to the whole of the plastics substrate having the printed image (15) or only in the form of the printed image (15).

11. Device for carrying out a method according to any one of the preceding claims, wherein the device has
- a selection device for selecting (3) an image section (12, 12a) from electronically stored image data of an image (11, 12, 13),
- an application device for applying (4) a connecting layer (12) to the plastics substrate (14), the surface area and surface shape of the connecting layer (12) corresponding or almost corresponding to the surface area and surface shape of the selected image section (12, 12a), and
- a printing device for printing (7) the applied connecting layer (12b) with a printed image (15) that reproduces the image section, in such a manner that the connecting layer (12b) and the printed image (15) are congruent or almost congruent.

12. Device according to claim 11,
wherein a determination device for determining differences in colour between individual image regions and/or differences in brightness between individual image regions and/or lines of individual image regions in the electronically stored image; a first regulating device for regulating (8) the application device in such a manner that the connecting layer (12b) is applied, with received surface position data, to a surface of the plastics substrate (14), and a second regulating device for regulating (9) the printing device are so arranged that the printed image (15) is applied, with the surface position data applied thereto, to the entire area or almost the entire area of a surface of the connecting layer (12b).

13. Device according to claim 11 or 12,
wherein the first and second regulating devices are combined to form a single control or regulating device.

14. Security document having a plastics substrate (14) which bears an image, wherein an image section (12, 12a) of an image (11, 12, 13) is applied to the security document and, between the image section (12, 12a) of the image (11, 12, 13) and the plastics substrate (14), a connecting layer (12b) is applied to the plastics substrate (14), the surface area and surface shape of the connecting layer (12b) corresponding or almost corresponding to the surface area and surface shape of the selected image section (12, 12a), so that the connecting layer (12b) and the printed image (15) are congruent or almost congruent.

15. Security document having a plastics substrate (14) according to claim 14, wherein the connecting layer (12b) has a surface content which is not more than from about 1% to about 10% greater than the surface content of the printed image (15), and/or wherein a protective layer is applied to the image section that reproduces the printed image (15), which protective layer is either applied to the entire surface of the plastics substrate having the printed image (15) or is applied thereto only in the form of the printed image (15).

## Revendications

1. Procédé pour appliquer au moins une image sur un substrat en plastique (14) d'un document de sécurité, comprenant les étapes suivantes :
- la sélection (3) d'une portion d'image (12, 12a) à partir de données mémorisées électroniquement d'une image (11, 12, 13),
- l'application (4) sur ledit substrat en plastique (14) d'une couche de liaison (12b) dont la superficie et la forme correspondent ou correspondent presque à la superficie et à la forme de ladite portion d'image (12, 12a) sélectionnée ;
- l'impression (7) sur ladite couche de liaison appliquée (12b) d'une image d'impression (15) reproduisant la portion d'image de telle manière que la couche de liaison (12b) et ladite image d'impression (15) coïncident ou coïncident presque.

2. Procédé selon la revendication 1,
dans le cadre duquel l'étape de la sélection (3) d'une portion d'image (12, 12a) à partir de données mémorisées électroniquement d'une image (11, 12, 13) comprend pour étape/étapes la détermination (1), au moyen d'un dispositif de détermination, de différences de couleur de différentes zones d'image et/ou de différences de luminosité de différentes zones d'image et/ou de tracés de ligne entre différentes zones d'image, dans l'image mémorisée électroniquement.

3. Procédé selon la revendication 1 ou 2,
dans le cadre duquel sont détectées (2), sur la base des différences de couleur et/ou des différences de luminosité et/ou des tracés de ligne déterminés, des données de position de surface d'une portion d'image (12) à sélectionner de l'image mémorisée électroniquement (13a, 11, 12, 13), au moyen d'un dispositif de détection.

4. Procédé selon la revendication 3,
dans le cadre duquel lesdites données de position de surface sont envoyées (5) à un premier dispositif de réglage du dispositif d'application.

5. Procédé selon la revendication 4,
dans le cadre duquel ledit premier dispositif de réglage est, au cours de l'étape d'application (4) d'une couche de liaison (12b), commandé ou réglé (8) de telle manière que la couche de liaison (12b) est appliquée, avec les données de position de surface transmises, sur une surface du substrat en plastique (14).

6. Procédé selon l'une des revendications 3 à 5,
dans le cadre duquel les données de position de surface sont transmises (6) à un deuxième dispositif de réglage du dispositif d'impression.

7. Procédé selon la revendication 6,
dans le cadre duquel le dispositif d'impression est commandé ou réglé (9) de telle manière par ledit deuxième dispositif de réglage que l'image d'impression (15) est, avec les données de position de surface appliquées à celle-ci, appliquée sur une surface de la couche de liaison (12b) de manière à recouvrir toute la surface ou presque toute la surface.

8. Procédé selon l'une des revendications précédentes,
dans le cadre duquel la portion d'image (12, 12a) représente une tête et, le cas échéant, une partie du cou et des épaules d'une personne à l'intérieur d'une photographie de portrait.

9. Procédé selon l'une des revendications précédentes,
dans le cadre duquel la couche de liaison (12b) est une couche de revêtement, préférentiellement constituée d'une matière contenant du polyester.

10. Procédé selon l'une des revendications précédentes,
dans le cadre duquel une couche de protection, qui est appliquée avec l'image d'impression (15) sur le substrat en plastique, soit sur toute la surface de celui-ci, soit uniquement dans la forme de l'image d'impression (15), est appliquée sur la portion d'image reproduisant l'image d'impression (15).

11. Dispositif pour exécuter un procédé selon l'une des revendications précédentes, ce dispositif présentant
- un dispositif de sélection pour sélectionner (3) une portion d'image (12, 12a) à partir de données mémorisées électroniquement d'une image (11, 12, 13),
- un dispositif d'application pour appliquer (4) sur le substrat en plastique (14) une couche de liaison (12b) dont la superficie et la forme correspondent ou correspondent presque à la superficie et à la forme de la portion d'image sélectionnée (12, 12a), et
- un dispositif d'impression pour imprimer (7) sur la couche de liaison appliquée (12b) une image d'impression (15) reproduisant la portion d'image de telle manière que la couche de liaison (12b) et l'image d'impression (15) coïncident ou coïncident presque.

12. Dispositif selon la revendication 11,
dans le cadre duquel un dispositif de détermination pour déterminer des différences de couleur de différentes zones d'image et/ou des différences de luminosité de différentes zones d'image et/ou des tracés de ligne entre différentes zones d'image dans l'image mémorisée électroniquement, un premier dispositif de réglage pour régler (8) de telle manière le dispositif d'application que la couche de liaison (12b) est appliquée, avec les données de position de surface reçues, sur une surface du substrat en plastique (14), et un deuxième dispositif de réglage pour régler (9) le dispositif d'impression sont disposés de telle façon que l'image d'impression (15) est, avec les données de position de surface appliquées à celle-ci, appliquée sur une surface de la couche de liaison (12b) de manière à recouvrir toute la surface ou presque toute la surface.

13. Dispositif selon la revendication 11 ou 12,
dans le cadre duquel le premier et le deuxième dispositif de réglage sont réunis pour former un seul dispositif de commande ou de réglage.

14. Document de sécurité pourvu d'un substrat en plastique (14) qui supporte une image, une portion d'image (12, 12a) d'une image (11, 12, 13) étant appliquée sur le document de sécurité, et une couche de liaison (12b), dont la superficie et la forme correspondent ou correspondent presque à la superficie et à la forme de la portion d'image sélectionnée (12, 12a) si bien que la couche de liaison (12b) et l'image d'impression (15) coïncident ou coïncident presque, étant appliquée sur le substrat en plastique (14), entre la portion d'image (12, 12a) de l'image (11, 12, 13) et le substrat en plastique (14).

15. Document de sécurité pourvu d'un substrat en plastique (14) selon la revendication 14, la couche de liaison (12b) ayant un contenu de surface supérieur au maximum d'environ 1% à environ 10% au contenu de surface de l'image d'impression (15), et/ou une couche de protection, qui est appliquée avec l'image d'impression (15) sur le substrat en plastique, soit sur toute la surface de celui-ci, soit uniquement dans la forme de l'image d impression (15), étant appliquée sur la portion d'image reproduisant l'image d'impression (15).
